Europäisches Patentamt

European Patent Office

Office européen des brevets

(19)

(11) EP 0 728 400 B1

(12) EUROPÄISCHE PATENTSCHRIFT

(45) Veröffentlichungstag und Bekanntmachung des Hinweises auf die Patenterteilung:
**27.01.1999 Patentblatt 1999/04**

(21) Anmeldenummer: **95932675.2**

(22) Anmeldetag: **06.09.1995**

(51) Int Cl.⁶: **H04N 9/31**

(86) Internationale Anmeldenummer:
**PCT/EP95/03501**

(87) Internationale Veröffentlichungsnummer:
**WO 96/08116 (14.03.1996 Gazette 1996/12)**

(54) **VERFAHREN UND VORRICHTUNG ZUM ERZEUGEN MINDESTENS DREIER LASERSTRAHLEN UNTERSCHIEDLICHER WELLENLÄNGE ZUR DARSTELLUNG FARBIGER VIDEOBILDER**

METHOD AND DEVICE FOR GENERATING AT LEAST THREE LASER BEAMS OF DIFFERENT WAVELENGTHS TO DISPLAY COLOUR VIDEO IMAGES

PROCEDE ET DISPOSITIF DE PRODUCTION D'AU MOINS TROIS FAISCEAUX LASER DE DIFFERENTES LONGUEURS D'ONDES, SERVANT A VISUALISER DES IMAGES VIDEO EN COULEURS

(84) Benannte Vertragsstaaten:
**DE FR GB NL**

(30) Priorität: **08.09.1994 DE 4432029**

(43) Veröffentlichungstag der Anmeldung:
**28.08.1996 Patentblatt 1996/35**

(73) Patentinhaber: **LDT GmbH & Co.
Laser-Display-Technologie KG
07552 Gera (DE)**

(72) Erfinder: **WALLENSTEIN, Richard
D-67269 Grünstadt (DE)**

(74) Vertreter: **Geyer, Werner, Dr.-Ing. et al
Patentanwälte
Geyer, Fehners & Partner
Perhamerstrasse 31
80687 München (DE)**

(56) Entgegenhaltungen:
**EP-A- 0 084 434**     **DE-A- 4 219 169**
**US-A- 3 818 129**     **US-A- 5 295 143**

**Beschreibung**

Die Erfindung bezieht sich auf ein Verfahren zum Erzeugen mindestens dreier Laserstrahlen unterschiedlicher Wellenlängen zur Darstellung farbiger Videobilder, bei dem jeder Laserstrahl zur Erzeugung eines monochromen Teilbildes intensitätsmäßig gesteuert wird und diese monochromen Teilbilder für die Darstellung des farbigen Videobildes additiv gemischt werden, wobei mindestens einer der drei Laserstrahlen dadurch gewonnen wird, daß ein Medium zumindest von einem Teilstrahl eines primären Lasers mit definierter Wellenlänge angeregt wird, das bei Anregung einen Laserstrahl mit einer von der Wellenlänge des anregenden primären Lasers verschiedenen Wellenlänge aussendet, und wobei der anregende und der angeregte Laserstrahl direkt oder nach Frequenzkonvertierung zur Darstellung monochromer Teilbilder eingesetzt werden. Weiter bezieht sich die Erfindung noch auf eine Vorrichtung zum Erzeugen mindestens dreier Laserstrahlen unterschiedlicher Wellenlängen zur Darstellung farbiger Videobilder, insbesondere zur Durchführung eines solchen Verfahrens, mit einer Steuerungseinrichtung zur Ansteuerung der drei Laserstrahlen zum Generieren monochromer Teilbilder, die für die Darstellung des farbigen Videobildes additiv mischbar sind, und die Vorrichtung einen primären Laser sowie ein durch diesen anregbares Medium aufweist, wobei der anregende und der angeregte Laserstrahl direkt oder nach Frequenzkonvertierung zur Darstellung monochromer Teilbilder einsetzbar sind.

Mit herkömmlichen Bildwiedergabetechniken, insbesondere mit Bildröhren, sind großflächige Anzeige- und Projektionssysteme hoher Brillanz nicht verwirklichbar, da die Bildschirme wegen der Vakuumanforderungen zu schwer oder mechanisch instabil werden.

Seit einiger Zeit wird vorgeschlagen, Videobilder mit Hilfe von Lasern auf einem Schirm abzubilden. Dabei werden die Laserstrahlen mit Hilfe einer Ablenkeinrichtung, die beispielsweise mit Hilfe von schnell bewegten Dreh- und Schwenkspiegeln oder akustooptischen Modulatoren verwirklicht ist, über einen Schirm gerastert, so daß dort eine Anzahl Bildpunkte nebeneinander und in übereinander liegenden Zeilen mit dem Laserlicht beleuchtet werden. Die Lichtintensität der Laser wird gemäß der für jeden Bildpunkt auszuleuchtenden Helligkeit moduliert. Das Abbildungsprinzip ist also dasselbe wie bei der Bildröhre; der Laserstrahl ersetzt dabei den Elektronenstrahl und die Spiegel oder die akustooptischen Modulatoren die Ablenkeinrichtung. Ein derartiges System ist beispielsweise in der DE 43 06 797 C beschrieben.

Für Farbbilder müssen allerdings drei Laserstrahlen verwendet werden. Der Aufwand für drei Laser ist sehr hoch, vor allem, wenn Gaslaser eingesetzt werden. Wenn diese Laservideotechnik vor allem auch für den Konsumbereich verfügbar sein soll, müssen insbesondere die Kosten für die Laserquellen gesenkt werden.

In der US 5 317 348 A wird dazu der Einsatz von Halbleiterlasern oder diodengepumpten Festkörperlasern vorgeschlagen. Beispielsweise kann man für die Erzeugung des grünen Laserstrahls einen mit einer GaAlAs- Diode gepumpten Nd:YAG-Laser mit einer Wellenlänge von 531 nm einsetzen. Als Alternative wird auch vorgeschlagen, den YAG-Laser bezüglich einer Wellenlänge des ausgehenden Laserstrahls von 1064 nm zu betreiben und diese mit Hilfe eines Frequenzverdopplers für eine Wellenlänge von 532 nm für Grün zu konvertieren. Allerdings sind dann bei der Frequenzverdopplung Leistungsverluste zu befürchten.

Auch das in dieser Patentschrift dargestellte Videogerät benötigt prinzipiell drei Laser zur Erzeugung der drei Laserstrahlen. Durch Einsatz von diodengepumpten Festkörperlasern lassen sich zwar die Kosten verringern, wünschenswert wäre allerdings, wenn sich mehrere im Videogerät eingesetzten Laserstrahlen mit einem gemeinsamen Laser erzeugen ließen, da man dabei erwarten kann, daß sich der Aufwand dann weiter verringern läßt.

Dazu wird in der EP 0 084 434 A, die den einleitend erwähnten Stand der Technik beschreibt, vorgeschlagen, einen einzigen Argonionenlaser als primären Laser zu verwenden, mit dem ein blauer und ein grüner Laserstrahl erzeugt wird.

Mit einem Teil des grünen Strahls wird ein Farbstofflaser angeregt, um mit diesem zusätzlich eine rote Laserstrahlkomponente zu erzeugen.

Allerdings muß gemäß dieser Druckschrift wieder ein teurer Argonionenlaser eingesetzt werden, der wegen des niedrigen Konversionsgrades auch zusätzliche Kühlung benötigt. Die zusätzlichen Komponenten, wie Farbstofflaser, Filter, sowie Prismen und Polarisatoren erhöhen den Aufwand ebenfalls.

Der primäre Argonionenlaser könnte zwar durch einen diodengepumpten Festkörperlaser ersetzt werden, jedoch ist der zugängliche Wellenlängenbereich dann möglicherweise stark beschränkt. Bei einem Farbvideosystem ist es nämlich zweckmäßig, eine hohe Weißleuchtdichte zu erzielen. Das bedeutet, die drei verschiedenfarbigen Farbanteile sollten, wenn die Wellenlängen zur Darstellung der Farben Rot, Grün, und Blau ausgesucht sind, ungefähr gleiche Intensitäten haben, da sonst der Laserstrahl mit der kleinsten Intensität für weiß die maximal mögliche Leistung der anderen Laserstrahlen beschränken würde. Bei stark unterschiedlichen Leistungen müßte andernfalls die Laserleistung des primären Lasers zum Erreichen der gleichen Leuchtstärke sehr hoch sein, was einen zusätzlichen Aufwand, beispielsweise für Kühlung, nach sich ziehen würde. Außerdem müßten eventuell die optischen Elemente für hohe Standzeiten überdimensioniert werden, was ebenfalls die Kostenersparnis durch die Erzeugung mehrerer Laserstrahlen mit Hilfe einer einzigen primären Laserquelle herabsetzen würde.

Aufgabe der Erfindung ist es, ein Verfahren und eine Vorrichtung zur Darstellung eines farbigen Videobildes mit Hilfe von Lasern zu schaffen, bei dem der Aufwand für die Laserquellen deutlich reduziert ist.

Ausgehend vom gattungsgemäßen Verfahren wird die Aufgabe dadurch gelöst, daß als primärer Laser ein gepulster Laser und als Medium ein Material mit nichtlinearen optischen Eigenschaften eingesetzt wird, wobei dieses Material neben dem durch Anregung erzeugten Laserstrahl noch einen weiteren Laserstrahl freigibt, dessen Frequenz sich als Summe oder Differenz von Frequenzen des anregenden und des angeregten Laserstrahls ergibt, und daß die vom Medium abgegebenen Laserstrahlen direkt als Laserstrahlen zur Darstellung der monochromen Teilbilder eingesetzt oder in diese konvertiert werden.

Erfindungsgemäß werden in dem Medium also mindestens zwei Laserstrahlen erzeugt. Dies ist dadurch möglich, daß statt des Farbstoffes des eingangs genannten Farbstofflasers ein nichtlineares optisches Medium eingesetzt wird. Aufgrund der nichtlinearen optischen Eigenschaften werden vom Medium ausgehende Laserstrahlen erzeugt, deren Frequenz sich aus der Summe oder Differenz des angeregten Laserstrahls ergibt. In einem derartigen Material können daher gleich mindestens zwei der zur Darstellung eines farbigen Videobildes nötigen Laserwellenlängen erzeugt werden. Der Aufwand ist damit gegenüber dem Stand der Technik deutlich reduziert.

Die die nichtlinearen optischen Effekte wiedergebenden Materialkonstanten sind jedoch im allgemeinen klein, so daß a priori keine hohe Intensität zu erwarten ist. Wegen der nichtlinearen Eigenschaften steigen die Intensitäten für den weiteren Laserstrahl jedoch drastisch mit der Feldstärke des anregenden Laserstrahls an. Deswegen ist für die Anregung ein Pulsbetrieb vorgesehen, bei dem in einem Puls Leistungen von einigen Kilowatt bis in den Gigawattbereich auftreten können. Schon im Bereich von Kilowatt lassen sich, wie die Erfahrung zeigt, Konversionsfaktoren von bis zu 50% der anregenden Laserstrahlen erreichen.

Durch die gepulste Betriebsart wird bei Leistungsspitzen die Leistung pro Zeiteinheit herabgesetzt, so daß die optischen Komponenten nur wenig belastet werden, was sich beim Betrieb eines Gerätes vor allem in geringeren Wartungserfordernissen und gleichbleibender Bildqualität über lange Zeiträume vorteilhaft bemerkbar macht.

Durch die Pulse wird außerdem die zeitliche Kohärenz der Laserstrahlen reduziert. Wie aus der Wellenlehre bekannt ist, ergibt sich bei einem kurzen Wellenzug immer ein Frequenzspektrum statt einer einzigen Welle. Dieser Effekt kann ausgenutzt werden, um Speckle im Videobild zu reduzieren.

Unter Speckle versteht man im Laservideobereich störende glitzernde Punkte, die sich aufgrund der Kohärenzeigenschaften des Laserstrahls über Interferenzmaxima ausbilden. Bei einem verbreiterten Frequenzspektrum verschmieren sich derartige Interferenzmaxima jedoch, da die Orte der Speckle bei jeder der Frequenzen im Spektrum unterschiedlich sind. Deshalb sind durch die kurze Pulsdauer die Speckle immer vermindert.

Das Pulsen führt zu einem weiteren positiven Nebeneffekt bei Videobildern, die als Bildpunkte so gerastert werden, wie es beispielsweise von der Fernsehtechnik mit Bildröhre bekannt und auch bei dem eingangs genannten Stand der Technik für Videosysteme mit Lasern genannt wurde. Die Schärfe eines einzelnen Bildpunkts ist abhängig davon, mit welcher Flankensteilheit der Bildpunkt moduliert werden kann. Wenn man den Laser im Dauerstrich betreiben würde, wäre diese Flankensteilheit im wesentlichen durch den Modulator und die Grenzfrequenz des diesen ansteuernden Verstärkers beschränkt. Bei sehr kurzen Laserpulsen ist die Flankensteilheit dagegen durch die Pulsdauer dominiert. Deshalb kann man bei gepulsten Lasern zur Modulation auch Verstärker mit geringerer Grenzfrequenz einsetzen, so daß der Aufwand weiter verringert ist.

Aus Vorstehendem ergibt sich, daß eine kurze Pulsdauer um so vorteilhafter ist, je kürzer sie ist. Deshalb ist bei einer bevorzugten Weiterbildung der Erfindung vorgesehen, daß der anregende Laser mit einer Pulsdauer unter 100 ps gepulst wird, die eine Obergrenze bildet, wie sie sich aus praktischen Versuchen ergeben hat.

Bei einer anderen vorteilhaften Weiterbildung der Erfindung sind der anregende Laser bezüglich seiner Wellenlänge und das Medium so ausgesucht, daß bei Zuordnung der Farben Rot, Grün und Blau zu den Wellenlängen der drei zur Darstellung der monochromen Teilbilder erzeugten Laserstrahlen die Wellenlänge des erzeugten blauen Laserstrahls zwischen 400 nm und 470 nm liegt, die Wellenlänge des erzeugten grünen Laserstrahls im Bereich von 520 nm bis 540 nm liegt, und die Wellenlänge des erzeugten roten Laserstrahls kleiner als 635 nm ist, wobei die Leistungen der Laserstrahlen über die Pulsdauer mit den Farben Rot und Blau nicht mehr als 30 % von der Leistung des grünen Laserstrahls abweichen.

Aufgrund dieser Auswahl wird eine hohe Weißleuchtdichte bei farbigen Videobildern erzielt, wobei zur Erzeugung eines weißen Bildpunktes maximaler Helligkeit nahezu die gesamte Laserleistung ausgenutzt wird. Dadurch können die Materialien und der anregende Laser sowie eventuelle Mittel zur Konversion für eine geringere Leistung ausgewählt werden. Ebenso verringert sich der Aufwand für etwaige zusätzliche Kühlungen, deren Leistung dann gering ist oder die sogar ganz entfallen können.

Diese Vorteile werden vor allem dann in einfacher Weise erreicht, wenn gemäß einer vorzugsweisen Weiterbildung der Erfindung über die Grundfrequenz oder eine höhere Harmonische eines modengekoppelter Nd: YLF-Laser oder eines Nd: YVO$_4$-Laser angeregt wird.

Bei einer anderen bevorzugten Weiterbildung der Erfindung werden das Material für das Medium so ausgewählt und das Medium sowie Spiegel zur phasengerechten Einkopplung der anregenden und ausgehenden Laserstrahlen so positioniert, daß sich der Aufbau eines optisch-parametrischen Oszillators ergibt.

Derartige optisch-parametrische Oszillatoren sind beispielsweise aus der DE 42 19 169 A bekannt. Dort wird als Material ein Kristall benützt, in dem mit einem primären Laser ein Signalstrahl angeregt werden kann. Aufgrund der nichtlinearen optischen Eigenschaften des Kristalls wird dabei der einlaufende Laserstrahl in zwei Wellen zerlegt, deren Frequenzen summiert die Frequenz des einlaufenden Laserstrahl ergeben. Der sich so neben dem Signalstrahl erzeugte weitere Strahl wird als "Idlerstrahl" bezeichnet.

Optisch-parametrische Oszillatoren haben den Vorteil, daß sich durch Änderung der Kristallrichtung zur einlaufenden Welle auch die Frequenzen des Signalstrahls und des Idlerstrahls einstellen lassen. Dadurch können die Wellenlängen der im Medium erzeugten Laserstrahlen besonders einfach bezüglich einer optimalen Weißleuchtdichte ausgewählt und eingestellt werden.

Die Spiegel dienen wie beim Laser zur Erzeugung stehender Wellen zur stimulierten Emission. Beim vorteilhaften Pulsbetrieb ist bei der Dimensionierung des Spiegelsystems für eine günstige Betriebsweise zu beachten, daß die Wellen eines ersten Pulses phasengleich mit denen eines folgenden Pulses gekoppelt werden.

Die Wellenlängen des angeregten Strahls können aber auch von anderen physikalischen Parametern wie der Temperatur abhängen.

Damit diesbezüglich stabile Bedingungen vorliegen, ist gemäß einer vorteilhaften Weiterbildung vorgesehen, daß die Temperatur des Mediums geregelt wird. Die erforderliche Regelgenauigkeit sollte im Bereich unter 1°C liegen.

Bei einer anderen bevorzugten Weiterbildung der Erfindung wird die Wellenlänge des angeregten Laserstrahls über die Temperatur des Mediums eingestellt. Damit macht man sich die Temperaturabhängigkeit einiger Medien zunutze, um die Wellenlängen des angeregten und des weiteren Strahls festzulegen. Dies ist vorteilhaft, da dann bei einem optisch-parametrischen Oszillator die Kristallrichtung nicht genau eingehalten werden muß, wenn man die Wellenlängen über eine Verstellung der Temperatur nachregelt. Dann läßt sich für eine längere Zeitdauer ein stabiler Betrieb ohne Farbverfälschungen erreichen. Letztere könnten bei einer alleinigen Einstellung der Wellenlängen über die Kristallrichtung bei leichten Veränderungen des Kristalls, beispielsweise von dessen Winkel aufgrund von Stößen, auftreten, können aber über die Temperaturregelung in einfacher Weise begrenzt ausgeglichen werden.

Die zur Darstellung der monochromen Teilbilder verwendeten Laserstrahlen können z.B. durch Konversion der anregenden oder in dem Material erzeugten Laserstrahlen gewonnen werden. Man könnte auch daran denken, im wesentlichen Laserstrahlen kurzer Wellenlänge zu generieren und zur Konversion Farbstofflaser einzusetzen.

Einen besonders geringen Aufwand erhält man jedoch gemäß einer vorteilhaften Weiterbildung der Erfindung, bei der die anregenden und/oder die im Medium durch die anregenden Laserstrahlen erzeugten Laserstrahlen zur Konversion frequenzvervielfacht oder mit einem anderen Laserstrahl frequenzsummiert werden.

Da die Laserstrahlen erfindungsgemäß gepulst sind, also eine hohe Feldstärke des anregenden Laserlichts gegeben ist, ist diese Art der Konversion mittels nichtlinearer optischer Materialien besonders effektiv. Zusätzliche Farbstofflaser werden dabei eingespart.

Bei einer anderen bevorzugten Weiterbildung der Erfindung wird die Pulsdauer der Laserstrahlen so eingestellt, daß das erzeugte Wellenlängenspektrum im Laserstrahl Interferenzen des Laserstrahls mit sich selbst auslöscht. Damit lassen sich, wie bereits erwähnt, in vorteilhafter Weise Speckle unter die Beobachtungsgrenze reduzieren.

Man kann z.B. die Pulsdauer so wählen, daß die Verbreiterung des Wellenlängenspektrums die Speckle ausmittelt. Mit den aus der Wellenoptik bekannten Beziehungen läßt sich die Pulsdauer für den Einzelfall berechnen. Aufgrund des Huygenschen Prinzips ist aber bei der Berechnung das Verhalten jeder Kugelwelle in jedem vom Laserstrahl durchlaufenen Ort zu berücksichtigen, so daß sich für die günstigste Pulsdauer im Einzelfall kein allgemeiner Wert angeben läßt. Praktische Versuche mit einem Laserstrahl, der im Abstand von 2 m von einem Schirm erzeugt wurde und 2 mm Durchmesser hatte, zeigten jedoch bei 1 ps Pulsdauer keine Specklestruktur mehr, so daß dieser Wert als Anhaltspunkt für andere Dimensionierungen verwendet werden kann.

Bei einer anderen vorteilhaften Weiterbildung der Erfindung ist vorgesehen, daß die monochromen Teilbilder durch sequentielles Rastern des Bildes als Bildpunkte mit einer vorgegebenen Bildpuktfrequenz erzeugt und die Pulse des anregenden Laserstrahls mit einer Wiederholfrequenz wiederholt werden, die ein ganzzahliges Vielfaches der Bildpunktfrequenz ist. Hier wird in vorteilhafter Weise von der Schärfe der Bildpunkte Gebrauch gemacht, die durch eine kurze Pulsdauer gegeben ist.

Dadurch, daß die Wiederholfrequenz ein ganzzahliges Vielfaches der Bildpunktfrequenz ist, liegen in jedem Bildpunkt gleich viele Pulse. Dieses Päckchen aus Pulsen hat auch immer eine steile Anstiegsflanke und eine steile abfallende Flanke, was die Schärfe der Bildpunkte besonders begünstigt. Ferner wird dadurch, daß durch diese Art einer Synchronisation auch immer gleich viele Pulse im Bildpunkt liegen, auch in vorteilhafter Weise ein Flimmern des Bildes vermieden.

Die Erfindung bezieht sich ferner auf eine Vorrichtung der eingangs genannten Art, die dadurch gekennzeichnet ist, daß der primäre Laser so gepulst betreibbar ist, daß seine Lichtleistung in einem Puls freigegeben wird, und das Medium ein Material mit nichtlinearen optischen Eigenschaften ist, das neben dem durch den primären Laserstrahl angeregten Laserstrahl auch einen weiteren Laserstrahl freigibt, dessen Frequenz sich aufgrund der nichtlinearen optischen Eigenschaften des Materials als Summe oder Differenz von Frequenzen des primären und des angeregten Laserstrahls ergibt.

Bevorzugte Weiterbildungen der erfindungsgemäßen Vorrichtung ergeben sich zusätzlich aus der Anwendung folgender Merkmale (einzeln oder auch in Kombination miteinander):

- es sind Spiegel zur phasengerechten Einkopplung der anregenden und ausgehenden Laserstrahlen relativ zum Medium vorgesehen, das Medium ist ferner ein nichtlinearer optischer Kristall und Kristall sowie Spiegel sind bezüglich des primären Lasers in Art eines optisch-parametrischen Oszillators angeordnet;
- es ist eine Regeleinrichtung zur Regelung der Temperatur des Mediums vorgesehen;
- die Regeleinrichtung ist bezüglich der zu regelnden Temperatur einstellbar und die Wellenlänge des vom Medium angeregten Laserstrahls ist temperaturabhängig;
- zur Konversion der Laserstrahlen sind Frequenzvervielfacher oder Summenfrequenzbilder vorgesehen;
- es sind eine Ablenkeinrichtung zum Generieren der monochromen Teilbilder in einem Bildpunktraster mit einer Bildpunktfrequenz und eine Pulseinrichtung für den primären Laser vorgesehen, die den Laser mit einer Wiederholfrequenz pulst, die ein ganzzahliges Vielfaches der Bildpunktfrequenz ist.

Bei allen diesen Weiterbildungen der Vorrichtung ergeben sich die gleichen Vorteile, wie sie vorhergehend bei den Verfahren genannt wurden.

Bei einer anderen Weiterbildung der Erfindung ist in mindestens einem der Lichtwege der Laser ein selbstmodulierendes optisches Medium vorgesehen. Dieses kann insbesondere durch eine Lichtleitfaser verwirklicht sein. Mit ihrer Hilfe kann das Frequenzspektrum der Wellenlängen der Laser noch weiter verbreitert werden, wodurch Speckle noch wirkungsvoller als allein mit der kurzen Pulsdauer unterdrückt werden.

Nimmt man beispielsweise für den Eingangspuls eine Pulsdauer von 20 ps eine Wiederholrate von 100 MHz und eine mittlere Leistung von 1W an, so entsteht bei einer Lichtleitfaser von 11 m Länge aufgrund der Selbstmodulation eine spektrale Breite von 1 nm. Weiter tritt auch eine Gruppengeschwindigkeitsdispersion auf, welche die spektrale Breite weiter erhöht, so daß in der Praxis auch kürzere Lichtleitfasern eingesetzt werden können, um die Speckle mit Hilfe dieses Effekts wirkungsvoll zu verringern.

Die Erfindung wird nachfolgend anhand der Zeichnung beispielshalber im Prinzip noch näher erläutert. Es zeigen:

Fig. 1 eine schematische Darstellung für eine bekannte Vorrichtung zur Erzeugung von Farbvideobildern mit Hilfe von Laserstrahlen;

Fig. 2 ein Ausführungsbeispiel einer Laserstrahlquelle für eine erfindungsgemäße Vorrichtung;

Fig. 3 die Temperaturabhängigkeit der Wellenlängen des angeregten Strahls, des Signalstrahls, und des weiteren Strahls, des Idlerstrahls, bei der Laserstrahlquelle gemäß Fig. 2;

Fig. 4 eine graphische Darstellung der Leistung der Idlerstrahlung mit einer Wellenlänge von 1240 nm in Abhängigkeit von der Pumpleistung beim Ausführungsbeispiel nach Fig. 2.

Fig. 5 eine graphische Darstellung von Ergebnissen von Versuchen zur Speckleverminderung;

Fig. 6 eine graphische Darstellung von Alternativlösungen für andere Laserquellen als die in Fig. 2 gezeigte.

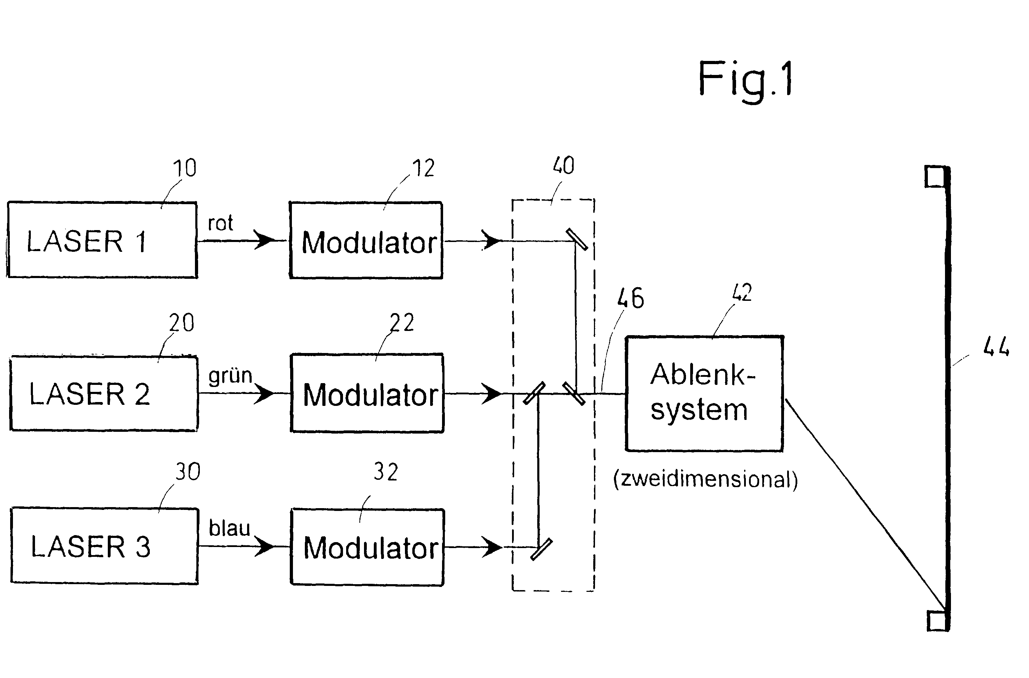

Anhand von Fig. 1 soll das Prinzip eines bekannten Videogerätes verdeutlicht werden. Zur Darstellung monochromer Teilbilder werden drei Laser 10, 20, 30 eingesetzt, üblicherweise mit Laserwellenlängen, die auf dem Spektralkurvenzug im CIE-Diagramm den Farben Rot, Grün und Blau entsprechen. Diese von den Lasern 10, 20, 30 ausgesandten Laserstrahlen werden mit Modulatoren 12, 22, 32 mit der jeweiligen Farbintensität amplitudenmoduliert, die für den jeweils auf einem Schirm zu beleuchtenden Bildpunkt zur Darstellung dieser Farbe geeignet ist. Anschließend werden die drei Laserstrahlen in einem Spiegel- oder Prismensystem 40 zu einem einzigen kollinearen parallelen Lichtbündel zusammengeführt, das mit einer Ablenkeinrichtung 42 auf einen Schirm 44 projiziert wird.

Erfindungsgemäß werden die Laserstrahlen mit einer geeigneten Wiederholrate gepulst. Um ein Flimmern zu verhindern, ist es zweckmäßig, pro Bildpunkt die gleiche Anzahl Pulse darzustellen, also die Pulse mit einer Wiederholfrequenz zu erzeugen, die ein ganzzahliges Vielfaches der Bildpunktfrequenz ist. Dann sind die Pulssteilheiten der dominierende Faktor für die Flanken bei der Darstellung eines Bildpunktes und die Grenzfrequenzen der Modulatoren 12, 22 und 32 müssen nicht extrem hoch gewählt werden. Gemäß Abtasttheorem genügt die doppelte Bildpunktfrequenz.

Zum Verringern von Speckle sind insbesondere Pulslängen im Bereich von 1 ps wesentlich, wie später noch eingehender erläutert wird. Bei gepulsten Laserstrahlen, kann man jedoch die spektrale Breite auch noch erhöhen, indem ein sogenannter Frequenzchirp auf den Laserstrahl aufgeprägt wird. Diese Verbreiterung entsteht bei Durchgang durch Materie aufgrund der Selbstphasenmodulation. Weiter trägt auch eine Gruppengeschwindigkeitsdispersion zur Verbreiterung im Laserstrahl bei.

Um diese Effekte auszunutzen, wird beispielsweise an der mit 46 bezeichneten Stelle eine Lichtleitfaser von ungefähr 10 m Länge eingefügt.

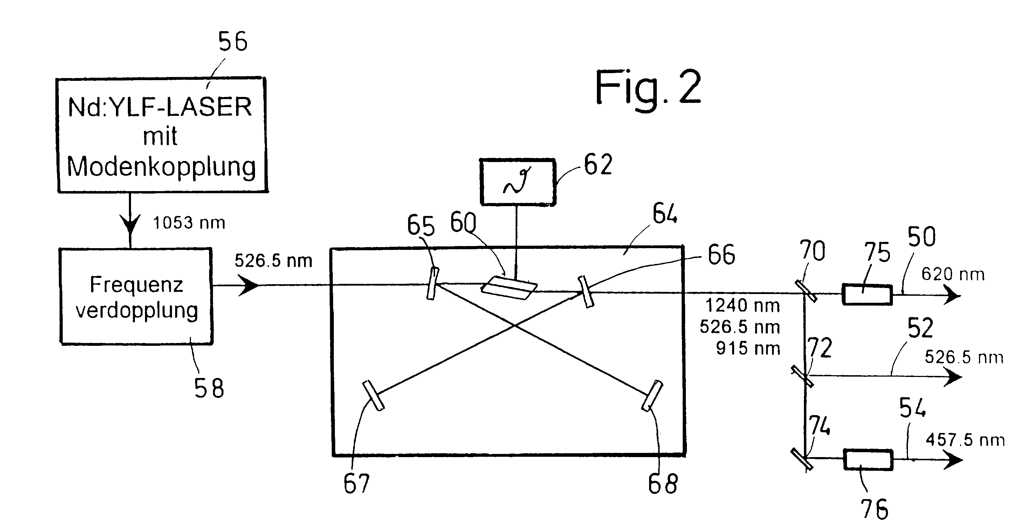

Die im folgenden anhand von Fig. 2 beschriebene Laserstrahlquelle ersetzt die drei Laser 10, 20, 30 im Prinzipbild von Fig. 1. Die Laserquelle erzeugt gleichzeitig einen gepulsten roten Laserstrahl 50 mit einer Wellenlänge von 620 nm, einen gepulsten grünen Laserlichtstrahl 52 mit einer Wellenlänge von 526,5 nm und einen gepulsten blauen Lichtstrahl mit einer Wellenlänge von 457, 5 nm.

Zur Anregung ist ein modengekoppelter Nd: YLF-Laser 56 vorgesehen, der Lichtpulse mit einer Wellenlänge von 1053 nm oder 1047 nm erzeugt. Die Pulsdauer beträgt typischerweise 30- 50 ps bei einer Wiederholfrequenz zwischen 70 und 100 MHz, so daß sich bei gebräuchlichen Systemen eine mittlere Leistung im Bereich 20- 30 W ergibt.

Ferner ist ein Frequenzverdoppler 58 vorgesehen, der beispielsweise aus einem nichtkritisch phasenangepaßten Kristall aus Lithiumtriborat bestehen kann. Mit dem Frequenzverdoppler wird der von dem Laser 56 ausgesandte Laserstrahl mit einer Wellenlänge von 1053 nm in einen Laserstrahl mit einer Wellenlänge von 526.5 konvertiert.

Die Konversionswirkungsgrade derartiger Frequenzverdoppler 58 sind bei Pulsbetrieb sehr hoch und können bis zu 50% betragen. Daher können diese in Systemen, wie sie im folgenden beschrieben werden, ohne große Leistungsverluste für die Erzeugung der Laserstrahlen für ein Farbvideosystem eingesetzt werden.

Mit Hilfe des grünen Laserstrahls wird in einem nichtlinea021 optischen Medium, welches im Ausführungsbeispiel ein Kristall 60 ist, ein Laserstrahl mit der Wellenlänge 915 nm und ein weiterer Laserstrahl mit einer Wellenlänge von 1240 nm angeregt. Die Summe der Frequenzen der angeregten Laserstrahlen ist gleich der Frequenz des anregenden Laserstrahls.

In dem Beispiel von Fig. 2 wurde der angeregt Laserstrahl und der weitere Laserstrahl in einem Aufbau, wie er von optischen - parametrischen Oszillatoren (OPO) bekannt ist, erzeugt. Aufgrund der nichtlinearen optischen Eigenschaften des Kristalls 60 werden mit Hilfe eines einfallenden Laserstrahls zusätzlich zwei Laserstrahlen nämlich der sogenannte Signalstrahl und der Idlerstrahl, generiert. Die Frequenz dieser beiden Strahlen hängt von der Kristallrichtung ab.

Als Material für den Kristall 60 wird dabei Lithiumtriborat verwendet, dessen Wellenlängen sich auch über die Temperatur einstellen lassen. Deswegen ist er in der schematischen Zeichnung von Fig. 2 auch an eine Regeleinrichtung 62 wärmemäßig angekoppelt, welche die Temperatur konstant auf 153°C hält.

Die Temperatur des Kristalls 60 ist ferner über die Regeleinrichtung 62 einstellbar, so daß die Wellenlängen der im Kristall 60 generierten Laserstrahlen prinzipiell wählbar sind. Im Ausführungsbeispiel wurde die Einstellbarkeit ausgenutzt, um den mit dem Kristall 60 verwirklichten OPO 64 zu stabilisieren, damit bei einer längeren Betrieb eines Videogeräts immer noch eine hohe Bildqualität erreichbar ist, die beispielsweise dadurch verändert sein könnte, daß der Kristall nach einiger Zeit nicht mehr in der günstigsten Lage bezüglich der Kristallrichtung zum einfallenden Laserstrahl liegt. Für die Stabilisierung wurde die Lichtintensität des aus dem gemeinsamen Laserstrahl ausgefilterten Signalstrahls als Sollwert verwendet. In gleicher Weise könnte man jedoch auch den Idlerstrahl oder eine Kombination der Intensitäten von Idlerstrahl und Signalstrahl einsetzen.

Der in Fig. 2 gezeigte OPO 64 arbeitet mit nichtkritischer Phasenanpassung und wird synchron mit dem Nd:YLF-Laser gepumpt. Für die Details der OPOs und ihren Aufbau wird in diesem Zusammenhang auf die eingangs genannte Literatur hingewiesen.

Der Resonator wird im Beispiel von Fig. 2 durch Spiegel 65, 66, 67, 68 gebildet, dessen schematisch gezeigte Anordnung im wesentlichen den im Ausführungsbeispiel verwendeten Aufbau wiedergibt.

Im Ausgang des OPO 64 sind die drei Lichtstrahlen, der anregende Strahl, der angeregte Strahl und der weitere Strahl in einem gemeinsamen Lichtbündel vereinigt, welcher mit Hilfe dichroitischer Spiegel 70, 72 und 74 in die einzelnen Laserstrahlen zerlegt wird. Statt dichroitischer Spiegel kann man auch Spiegel mit dünnen Schichten verwenden, die aufgrund von in den dünnen Schichten entstehenden Interferenzen Licht bei bestimmten Wellenlängen reflektieren, dagegen Licht anderer Wellenlängen durchlassen.

Der ausgekoppelte Signalstrahl mit einer Wellenlänge von 915 nm und der Idlerstrahl mit der Wellenlänge 1240 nm werden jeweils über einen weitere nichtlinearen optischen Kristall 75 und 76 frequenzverdoppelt, damit sich am Ausgang der Laserquelle gemäß Fig. 2 Laserstrahlen der Wellenlängen 457,5 nm für blau, 526,5 nm für grün und 620 nm für rot zur Darstellung farbiger Videobilder zur Verfügung stehen.

Die im Ausführungsbeispiel erreichten Leistungsanteile betrugen 100% für Rot, 106, 9% für Grün und 79, 2% für Blau, so daß eine hohe Weißleuchtdichte von 1,29 erreicht wird. Damit lassen sich farbige Videobilder hell darstellen, ohne daß Verluste aufgrund der Konversion des Laserstrahls aus der primären Laserquelle 56 erhöhten Kühlaufwand nötig machen. Abschätzungen zeigen allgemein, daß dieser Vorteil erreicht wird, wenn die Wellenlänge des blauen Laserstrahls zwischen 400 nm und 470 nm liegt, der grüne Laserstrahl eine Wellenlänge zwischen 520 nm und 540 nm aufweist, und die Wellenlänge des roten Laserstrahls kleiner als 635 nm ist, wobei die Leistungen der Laserstrahlen über die Pulsdauer mit den Farben Rot und Blau nicht mehr als 30 % von der des grünen Laserstrahls abweichen.

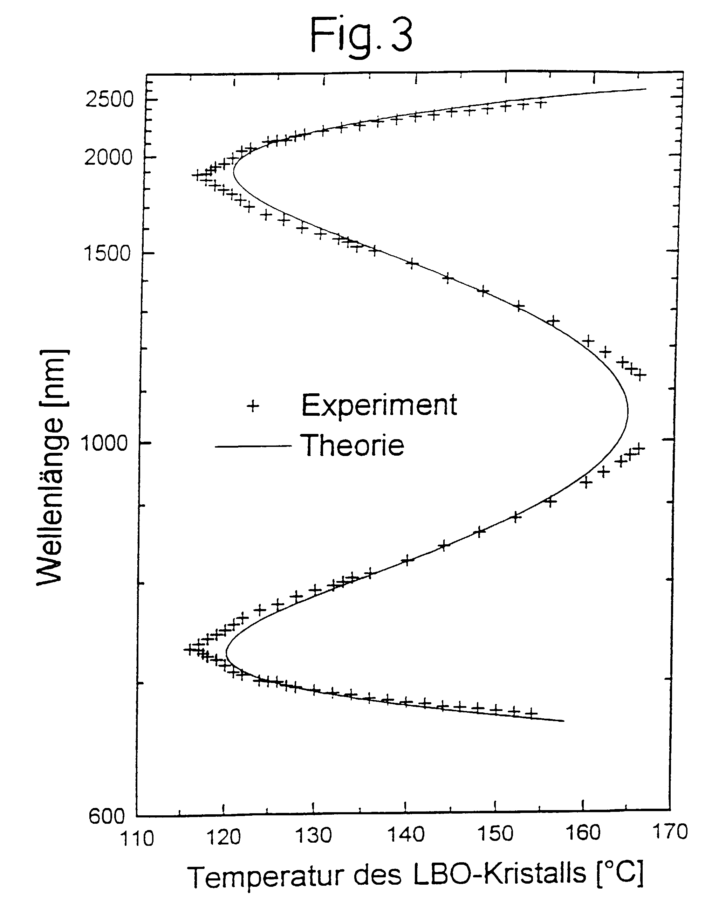

Fig. 3 zeigt die Abhängigkeit der Wellenlänge der Signal- und Idlerstrahlung eines mit Strahlung der Wellenlänge 526,5 nm angeregten LBO- OPOs von der Temperatur des LBO- Kristalls 60. Bei einer Temperatur von 153°C, wie sie im Ausführungsbeispiel von Fig. 2 verwendet wurde, ergeben sich die oben angegebenen Wellenlängen von 1240 und 915 nm für den angeregten und den weiteren Strahl. Bei Änderung der Temperatur um 2°C auf 151°C ergeben sich Wellenlängen von 904 nm und 1260 nm. In diesem Fall betragen die Leistungsanteile für das rote, grüne und blaue Laserlicht 100% (rot), 86% (grün) und 59% (blau), durch die sich eine relative Weißleuchtdichte von 0,99 ergibt.

Dieses Beispiel zeigt, daß mit den im Ausführungsbeispiel von Fig. 2 verwendeten Wellenlängen praktisch eine optimale Farbvideodarstellung erreichbar ist. Es zeigt weiter, daß für den optimalen Betrieb Temperaturregelungen mit einer Regelgenauigkeit von besser als 1°C erreicht werden sollten. Die große Änderung in der Weißleuchtdichte macht außerdem deutlich, daß man für hohe gleichbleibende Bildqualität den Istwert zur Temperaturregelung am besten aus der Leistung der erzeugten Laserstrahlen entnehmen sollte.

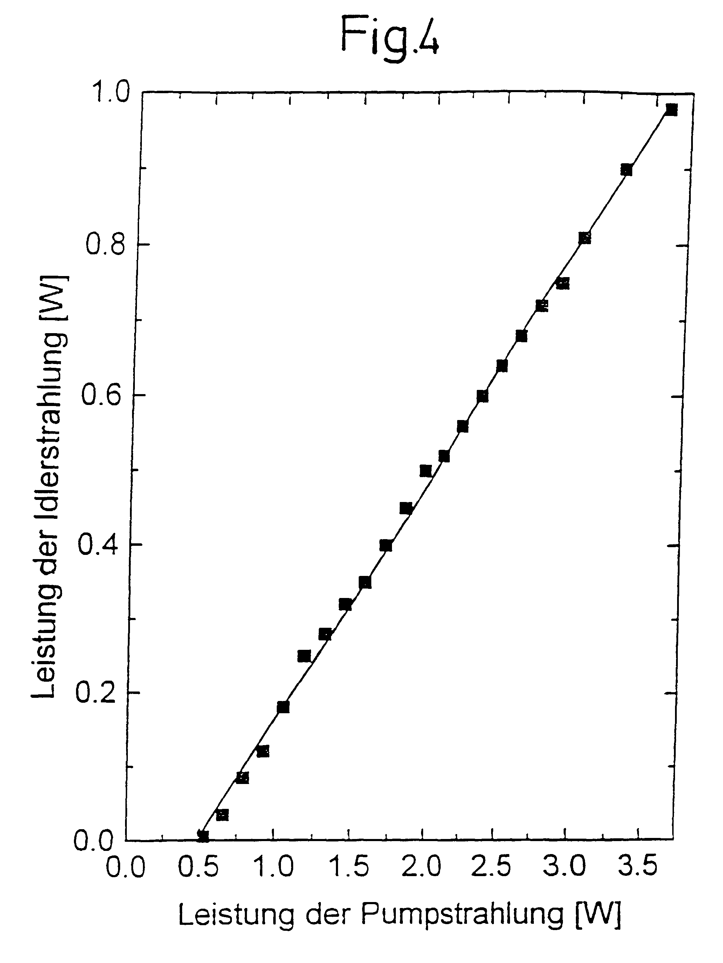

Fig. 4 zeigt die Leistung der Idlerstrahlung (1240 nm) in Abhängigkeit der Leistung (Pumpstrahlung) des anregenden Laserstrahls (526, 5 nm). Bei der Beurteilung der in der Figur gezeigten Meßwerte ist zu beachten, daß dort die mittlere Leistung aufgetragen ist. Die Daten wurden mit anregenden Laserpulsen einer Dauer von ungefähr 50 ps und 75 MHz Wiederholrate gewonnen. Das heißt, die Leistungen im Puls liegen im Kilowattbereich, die anregende Laserstrahlung hat also eine genügend hohe Feldstärke für eine Dominanz nichtlinearer optischer Parameter des Mediums.

Die in Fig. 4 gezeigte Meßkurve zeigt, daß bei einer Anregeleistung von 3, 5 W eine Idlerstrahlung mit einer Leistung von 1 W möglich wird.

Beim vorher gezeigten Ausführungsbeispiel wurde ein optisch angeregter Nd: YLF-Laser verwendet. Herkömmliche Nd: Lasersysteme werden mit Bogenlampen gepumpt. Es sind aber auch Hochleistungsdiodenlaser zum Pumpen von Festkörperlasern bekannt. Die optischen Wirkungsgrade dieser bekannten Laser betragen typisch 10 bis 20 %, wobei für den elektrischen Gesamtwirkungsgrad mehr als 5 % erreicht werden kann. Für eine Laserleistung von 30W wird daher eine maximale Leistung von ca. 600 W benötigt. Diese Leistung ist um Größenordnungen kleiner als die Anschlußleistung für Hochleistungslaser, die sichtbares Licht im Wattbereich emittieren. Diodengepumpte Festkörperlaser der genannten Art benötigen keine aufwendige Wasserkühlung, und man kommt allgemein mit Luftkühlung aus.

Die Frequenzverdopplung des Ausgangssignals des modengekoppelten Nd: YLF-Lasers mit einer mittleren Leistung von 30W erzeugt grüne Laserstrahlung mit einer Leistung von mindestens 10 W. Mit dieser anregenden Strahlung, die Pumpstrahlung für den synchrongepumpten LBO- OPO, erhält man Leistungen für Signal- und Idlerstrahl von 2 bis 3 W. Aufgrund der hohen Pulsleistung von einigen kW können mit der anschließenden Frequenzverdopplung über die Kristalle 75 und 76 ungefähr 50% dieser Leistungen genutzt werden. Die Leistung des im OPO nicht konvertierten grünen Laserlichts beträgt mehr als 2 W. Diese Leistungen reichen bei weitem zur Darstellung von farbigen Videobildern im Konsumerbereich mit Bilddiagonalen von 2 m aus.

Es ist zu erwarten, daß bei noch kürzeren Pulsen im Bereich von 1 ps die Konversionsgrade noch weiter erhöht werden können. Derartig kurze Pulse sind vor allem für die Verringerung der Speckle, also der unerwünschten Interferenzen der abbildenden kohärenten Laserstrahlen bei der Darstellung von Videobildern, erwünscht. Sehr kurze Pulse bedeuten eine Verbreiterung des Frequenzspektrums der kohärenten Laserstrahlung. Das damit zusammenhängende Wellenlängenspektrum führt zu einer Ausschmierung der Speckle. Die Speckle verschwinden also, wenn das Wellenlängenspektrum sehr breit ist. Die Breite ist, wie aus der Wellenoptik bekannt ist, umgekehrt proportional zur Länge eines Wellenzuges, also der Pulsdauer.

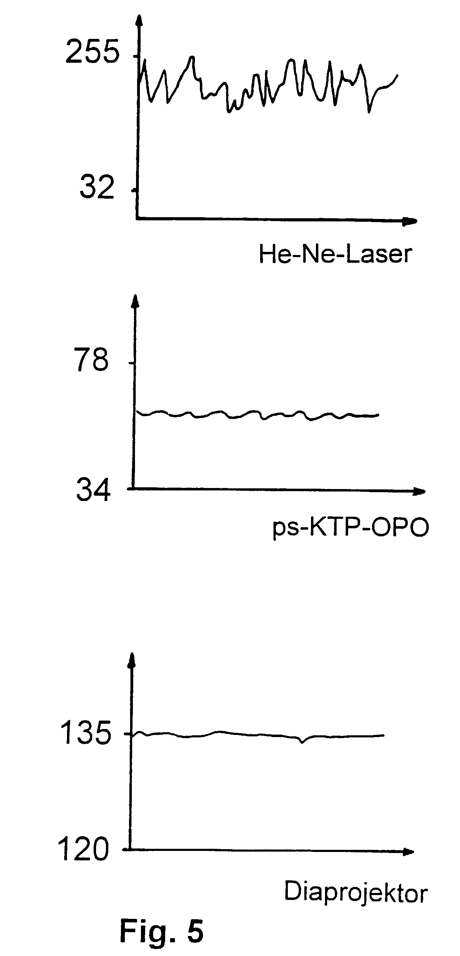

Dazu wurden einige Versuche durchgeführt, bei denen jeweils ein Lichtbündel auf eine 2 Meter entfernte Leinwand gerichtet wurde. Der auf der Leinwand beleuchtete Punkt wurde mit einer CCD-Kamera aufgenommen und die Pulshöhen in den in Fig. 5 gezeigten Diagrammen in Abhängigkeit vom Ort längs des Strahldurchmessers aufgetragen.

In dem oberen Diagramm von Fig. 5 wurde ein He-Ne-Laser im Dauerstrich auf die Leinwand gerichtet und vermessen. Die erkennbaren Intensitätsmaxima und -minima bilden die unerwünschten Speckle.

In dem darunter liegenden Diagramm ist das Ergebnis eines Versuchs gezeigt, bei dem der Lichtstrahl aus einem KTP-OPO, der mit einer Pulsdauer von 1 ps gepulst wurde, auf den Schirm gerichtet und vermessen wurde. Die Intensitätsstruktur ist deutlich flacher. Beim Vergleich der Diagramme ist zu beachten, daß die Intensitätsskala sich im oberen Diagramm zwischen 0 und 255 erstreckt, während das mittleren Diagramm von 34 bis 78 aufgetragen ist. Die Intensitätsmaxima im mittleren Diagramm variieren nur noch im Bereich von 2 Bit, liegen also in der Nähe der Auflösung des Wandlers. Die Speckle sind praktisch unterdrückt.

Im untersten Diagramm von Fig. 5 ist zusätzlich noch das Ergebnis bei Verwendung eines Diaprojektors als Lichtquelle gezeigt. Die unterste Meßkurve verläuft zwar flacher als die mittlere Meßkurve, jedoch sind auch dort kleine Abweichungen von einer gleichmäßigen Kurve beobachtbar. Erfahrungsgemäß werden derart kleine Abweichungen vom Auge nicht mehr erfaßt.

Daraus kann man erkennen, daß die noch geringe Variation der Intensität der zweiten Meßkurve ausreichend unterdrückt ist, damit die restlichen noch bestehenden Speckle bei den 1 ps Pulsen nicht mehr als störend empfunden werden.

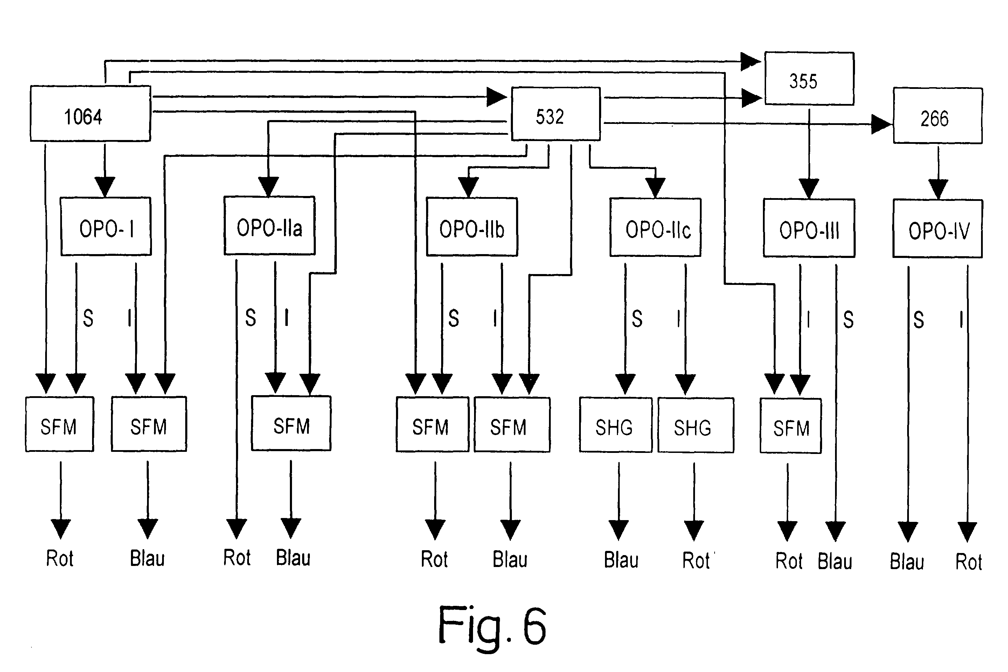

Fig. 6 zeigt schematisch alternative Lösungen zur Erzeugung eines roten oder eines blauen Strahls mit OPOs. In allen in Fig. 6 gezeigten Möglichkeiten sind Beispiele dafür gegeben, daß der OPO durch die Grundwelle von 1064 nm oder eine der höheren Harmonischen mit 532 nm, 355 nm, 266 nm eines Nd: $YVO_4$-Lasers angeregt wird.

Der anregende Laserstrahl wird einem der schematisch gezeigten OPO-I bis OPO-IV zugeführt, die in der nachfolgenden Tabelle näher charakterisiert sind. Die mit diesen erzeugten und anregenden Laserstrahlen werden anschließend in Summenfrequenzmischern (SFM) und Frequenzvervielfachern (SHG = Second Harmonic Generation) in die für im Laservideosystem verwendbaren roten und blauen Laserstrahlen konvertiert. Der grüne Laserstrahl kann zur farbigen Darstellung von Videobildern der zweiten Harmonischen mit 532 nm des anregenden Laserstrahls entnommen bzw. durch Frequenzverdopplung der Grundwelle gewonnen werden.

Die für die OPOs verwendbaren Materialien zur Erzeugung des roten und des blauen Strahles gemäß Fig. 6 sind in der beigefügten Tabelle aufgeführt. In der Tabelle und der Fig. 6 sind folgende Abkürzungen verwendet worden:

| | |
|---|---|
| OPO | Optisch - parametrischer Oszillator; |
| SFM | Sumfrequencymixing : =     Summenfrequenzmischung; |
| S | Signalstrahl; |
| I | Idlerstrahl; |
| SHG | Second Harmonic Generation:     Erzeugung der zweiten Harmonischen; |
| THG | Third Harmonic Generation:     Erzeugung der dritten Harmonischen; |
| FHG | Fourth Harmonic Generation:     Erzeugung der vierten Harmonischen; |

Die beispielhaft in der Tabelle aufgeführten, verwendbaren nichtlinearen Kristalle wurden mit folgenden im Stand der Technik häufig verwendete Abkürzungen bezeichnet:

| | | |
|---|---|---|
| LBO = | $LiB_3O_5$ = Lithiumtriborat | |
| | $KNbO_3$ = Kaliumniobat | |
| | $LiNbO_3$ = Lithiumniobat | |
| Banana = | $Ba_2NaNb_5O_{15}$ = | Bariumnatriumniobat |
| BBO = | beta-$BaB_2O_4$ = | Beta- Bariumborat |
| KTA = | $KTiOAsO_4$ = | Kaliumtitanoxidarsenat |
| KTP = | $KTiOPO_4$ = | Kaliumtitanoxidphosphat |
| RTP = | $RbTiOPO_4$ = | Rubidiumtitanoxidphosphat |
| RTA = | $RbTiOAsO_4$ = | Rubidiumtitanoxidarsenat |
| CTA = | $CsTiOAsO_4$ = | Cäsiumtitanoxidarsenat |

Die Tabelle führt in der ersten Spalte die Art des nichtlinearen Prozesse auf. Die zweite Spalte listet die verwendeten Wellenlängen in Nanometern für die Prozesse sowie die für Rot und Blau erzeugbaren Wellenlängen auf.

Die dritte Spalte bezeichnet die verwendbaren Kristalle und die physikalischen Parameter für die gewünschten Wellenlängen, wobei unter Winkel der Winkel zur Ausbreitungsrichtung des anregenden Laserlichts gegen die Kristallachse bzw. die Kristallachsen eingetragen ist. Mit Ebene ist die Hauptebene der biaxialen opisch zweiachsigen nichtlinearen Kristalle bezeichnet. Mit den römischen Ziffern I und II ist wie üblich der Phasenanpassungstyp gekennzeichnet; "o" bedeutet dabei die ordentliche und "e" die außerordentliche (extraordinary) Welle.

Mit "Temp" ist die Temperatur bezeichnet, bei der Phasenanpassung vorliegt. Wenn in der Tabelle für die Temperatur die Bezeichnung "RT" eingetragen ist, so ist damit gemeint, daß die aufgeführte nichtlineare Methode bei Raumtemperatur erfolgen kann.

Die Abkürzung "Fom" steht für "Figure of merit". Diese Größe ist ein Maß für die Stärke der nichtlinearen Wechselwirkung. Sie ist definiert als:

$$d_{eff}^{2}/(n_1 n_2 n_3),$$

wobei $d_{eff}$ der effektive nichtlineare Koeffizient des Kristalls und $n_1$, $n_2$ sowie $n_3$ die Brechungsindizes der beteiligten Wellen sind.

Der in der nachfolgenden Spalte aufgeführte Winkel ist der Walk-off- Winkel. Damit wird der Winkel des Energieflusses der neuen entstehenden Welle bzw. Wellen zur Einstrahlrichtung bezeichnet.

Die folgenden drei Spalten führen die Akzeptanzbreiten für den jeweiligen nichtlinearen Prozeß bezüglich Wellenlänge, Winkel und Temperatur auf. Die Abhängigkeit der Akzeptanzen von der Länge L des Kristalls ist dabei durch Produktbildung beseitigt.

Die Tabelle in Verbindung mit Fig. 6 zeigt deutlich die vielfältigen Möglichkeiten zur Realisierung der Erfindung auf. Die dabei erzeugten Laserstrahlen sind zur farbigen Darstellung von Videobildern mit genügender Leistung für eine hohe Weißleuchtdichte einsetzbar. Dabei ist die Gesamtleistung, die bei diesen Alternativen für akzeptable Laserleistungen zur Darstellung von Farbvideobildern zugeführt werden muß, immer in einem Bereich, der es gestattet, ein Videosystem ohne extremen Kühlaufwand aufzubauen.

# TABELLE

## RGB: Nichtlineare Methoden, Varianten mit Nd:YVO$_4$ ($\lambda$=1064 nm)

| Nichtlin. Prozeß | $\lambda$ | Rot Blau | Kristall | Winkel [Grad] | Ebene | Temp. [$^o$C] | Fom [(pm/V)$^2$] | $\rho$ [Grad] | $\Delta\lambda \cdot$ L [nm cm] | $\Delta\theta \cdot$ L [Grad cm] | $\Delta$T L [$^o$C cm] |
|---|---|---|---|---|---|---|---|---|---|---|---|
| SHG | 532 | | LBO | 0 | xy I (oo-e) | 136.1 | 0.17 | 0 | 3.7 | | 4.9 |
| " | 532 | | KNbO$_3$ | 0 | xz I (oo-e) | 157.4 | 14.9 | 0 | 0.25 | | 0.3 |
| " | 532 | | LiNbO$_3$ | 90 | I (oo-e) | 132.3 | 2.6 | 0 | 0.3 | | 0.9 |
| " | 532 | | Banana | 0 | xy I (ee-o) | 107.8 | 22.3 | 0 | 0.3 | | 0.6 |
| THG | 355 | | BBO | 31.3 | I (oo-e) | RT | 0.84 | 4.1 | 0.5 / 0.2 | 0.007 | - |
| THG | 355 | | LBO | 37.3 | xy I (oo-e) | RT | 0.1 | 1.1 | 0.8 / 0.4 | 0.03 | - |
| FHG | 266 | | BBO | 47.6 | I (oo-e) | RT | 0.5 | 4.9 | 0.073 | 0.005 | - |
| OPO I | 1534 + 3474 | 628 / 461 | KTA | 0 | xy II (e-eo) | RT | 3.1 | 0 | 2.0 (S) / 10.0 (I) | 9.6 | - |
| " | 1571 + 3297 | 634 / 458 | KTP | 0 | xy II (e-eo) | RT | 3.6 | 0 | 2.0 (S) / 8.6 (I) | 7.4 | - |
| " | 1604 + 3160 | 640 / 455 | RTP | 90 | xy II (e-eo) | RT | 2.0 | 0 | 1.9 (S) / 7.4 (I) | 6.7 | - |
| " | 1690 + 2872 | 653 / 449 | RTP | 0 | xy II (e-eo) | RT | 3.0 | 0 | 2.5 (S) / 7.3 (I) | 6.3 | - |
| " | 1590 + 3216 | 638 / 457 | RTA | 90 | xy II (e-eo) | RT | 0.9 | 0 | 2.3 (S) / 9.2 (I) | 10.3 | - |
| " | 1628 + 3071 | 643 / 453 | RTA | 0 | xy II (e-eo) | RT | 2.4 | 0 | 2.5 (S) / 8.9 (I) | 10.2 | - |
| " | 1545 + 3420 | 630 / 460 | KNbO$_3$ | 41.8 | xz I (e-oo) | 40.0 | 8.9 | 3.6 | 16 (S) / 16 (I) | 0.02 | 80 |
| SFM | 1064 + 1534 | 628 | KTA | 23.6 | xy II (eo-e) | RT | 2.6 | 0.13 | 1.2 / 15.7 | 0.8 | - |
| " | " | " | KTP | 76.2 | xz II (oe-o) | RT | 3.2 | 1.35 | 1.4 / 28.3 | 0.09 | - |
| " | " | " | RTP | 32.7 | xy II (eo-e) | RT | 2.6 | 0.32 | 1.3 / 62.7 | 0.32 | - |
| " | " | " | LBO | 0 | xy I (oo-e) | 8.6 | 0.17 | 0 | 26 / >100 | | 5.6 |
| " | " | " | LBO | 87 | xz I (ee-o) | 20.0 | 0.17 | ~0.1 | 25 / >100 | 0.35 | 5.6 |
| " | " | " | KNbO$_3$ | 31.3 | xz I (oo-e) | 38.1 | 11.1 | ~3.5 | 0.5 / 0.74 | 0.012 | 1.6 |
| SFM | 532 + 3474 | 461 | KNbO$_3$ | 31.2 | xz I (oo-e) | 40.0 | 10.5 | ~3.5 | 0.13 / 1.2 | 0.012 | 1.0 |

EP 0 728 400 B1

| | | | | | | | | | | | |
|---|---|---|---|---|---|---|---|---|---|---|---|
| " | " | " | LiNbO$_3$ | 54.4 | I (oo-e) | 40.0 | 3.2 | ~2.4 | 0.2 / 1.6 | 0.012 | 1.1 |
| " | " | " | KTA | 43.8 | xz II (eo-o) | RT | 1.2 | 3.2 | 0.8 / 4.5 | 0.013 | - |
| " | " | " | CTA | 60.2 | xz II (eo-o) | RT | 1.2 | 2.3 | 0.6 / 3.8 | 0.07 | - |
| " | " | " | RTA | 47.7 | xz II (eo-o) | RT | 1.1 | 2.9 | 0.9 / 4.2 | 0.014 | - |
| " | " | " | KTP | 44.1 | xz II (eo-o) | RT | 1.5 | 3.4 | 0.9 / 5.3 | 0.013 | - |
| " | " | " | RTP | 47.6 | xz II (eo-o) | RT | 1.4 | 2.3 | 0.7 / 4.9 | 0.013 | - |
| OPO IIa | 630 + 3420 | | KTP | 42.3 | xz II (o-eo) | RT | 1.4 | 3.1 | 0.3 (S) / 9.9 (I) | 0.016 | - |
| " | " | | RTP | 45.4 | xz II (o-eo) | RT | 1.3 | 3.0 | 0.3 (S) / 9.8 (I) | 0.016 | - |
| " | " | | CTA | 56.9 | xz II (o-eo) | RT | 1.1 | 2.2 | 0.3 (S) / 7.4 (I) | 0.021 | - |
| " | " | | RTA | 45.4 | xz II (o-eo) | RT | 1.1 | 2.7 | 0.3 (S) / 7.2 (I) | 0.018 | - |
| " | " | | KTA | 41.6 | xz II (o-eo) | RT | 1.2 | 2.9 | 0.3 (S) / 8.0 (I) | 0.017 | - |
| " | " | | KNbO$_3$ | 35.0 | xz I (e-oo) | 40.0 | 10.0 | 4.1 | 0.3 (S) / 1.9 (I) | 0.01 | 1.4 |
| OPO IIb | 780 + 1673 | | LBO | 0 | xy I (oo-e) | 94.4 | 0.17 | 0 | 3.6 (S) / 12.8 (I) | | 4.9 |
| " | 809.6+1551.5 | | LBO | 0 | xy I (oo-e) | 101.7 | 0.17 | 0 | 3.3 (S) / 9.2 (I) | | 4.9 |
| SFM | 809.6 + 1064 | 460 | KTP | 90 | xy II (oe-e) | RT | 1.1 | 0 | 1.0 / 0.5 | 1.8 | - |
| SFM | 1064 +1551.5 | 631 | KTA | 21.9 | xy II (eo-e) | RT | 2.7 | 0.12 | 1.2 / 17.1 | 0.8 | - |
| SFM | 780 + 1064 | 450 | KNbO$_3$ | 66.1 | xy I (oo-e) | RT | 9.4 | 2.3 | 0.2 / 0.3 | 0.012 | 0.25 |
| SFM | 780 + 1064 | 450 | KNbO$_3$ | 45.9 | yz I (ee-o) | RT | 12.7 | 1.1 | 0.2 / 0.3 | 0.028 | 0.3 |
| SFM | 780 + 1064 | 450 | BBO | 25.8 | I (oo-e) | RT | 0.95 | 3.5 | 1.5 / 2.1 | 0.011 | - |
| OPO IIc | 900 + 1301 | | LBO | 0 | xy I (e-oo) | 122.5 | 0.17 | 0 | 3.2 (S) / 5.4 (I) | | 4.9 |
| " | 900 + 1301 | | KNbO$_3$ | 0-20 | xz I (e-oo) | 20-177 | 13-14.9 | 0-2.7 | 0.2 (S) / 0.3 (I) | 0.013 | 0.3-0.7 |
| " | 900 + 1301 | | BBO | 22.6 | I (e-oo) | RT | 1.0 | 3.2 | 9.1 (S) / 19.0 (I) | 0.015 | - |
| " | 900 + 1301 | | RTA | 41.6 | xy II (e-oe) | RT | 1.6 | 0.32 | 0.6 (S) / 1.3 (I) | 0.18 | - |
| " | 900 + 1301 | | KTP | 67.9 | xz II (o-eo) | RT | 2.8 | 2.1 | 0.7 (S) / 1.5 (I) | 0.03 | - |

| | | | | | | | | | | | |
|---|---|---|---|---|---|---|---|---|---|---|---|
| " | 900 + 1301 | | RTP | 76.0 | xz II (o-eo) | RT | 2.6 | 1.4 | 0.7 (S) / 1.4 (I) | 0.05 | - |
| " | 920.8 + 1260 | | LBO | 0 | xy I (e-oo) | 126 | 0.17 | 0 | 3.2 (S) / 5.0 (I) | | 4.9 |
| " | 920.8 + 1260 | | KNbO$_3$ | 0-20 | xz I (e-oo) | 20-172 | 13-14.9 | 0-2.7 | 0.2 (S) / 0.3 (I) | 0.013 | 0.3-0.7 |
| " | 920.8 + 1260 | | BBO | 22.6 | I (e-oo) | RT | 1.0 | 3.2 | 11.1(S) / 20.7(I) | 0.015 | - |
| " | 920.8 + 1260 | | RTA | 53.5 | xy II (e-oe) | RT | 1.3 | 0.31 | 0.7 (S) / 1.2 (I) | 0.19 | - |
| " | 920.8 + 1260 | | KTP | 70.0 | xz II (o-eo) | RT | 2.9 | 2.0 | 0.7 (S) / 1.4 (I) | 0.04 | - |
| " | 920.8 + 1260 | | RTP | 79.7 | xz II (o-eo) | RT | 2.7 | 1.0 | 0.7 (S) / 1.3 (I) | 0.07 | - |
| SHG | 900 => 450 | 450 | KNbO$_3$ | 90 | xy I (oo-e) | 100.8 | 10.9 | 0 | 0.11 | | 0.17 |
| " | 920.8 => 460 | 460.4 | KNbO$_3$ | 90 | xy I (oo-e) | 129.1 | 11.0 | 0 | 0.13 | | 0.16 |
| " | 1260 => 630 | 630 | KNbO$_3$ | 31.0 | xz I (oo-e) | 40 | 12.0 | 3.5 | 0.6 | 0.01 | |
| " | " | 630 | BBO | 20.7 | I (oo-e) | RT | 1.1 | 2.9 | 5.5 | 0.02 | |
| " | " | 630 | LBO | 0 | xz II (oe-e) | 14.7 | 0.12 | 0 | 5.0 / 4.5 | 9.5 | |
| " | " | 630 | RTA | 81.8 | xz II (oe-o) | RT | 2.3 | 0.7 | 1.2 | 0.14 | |
| " | " | 630 | KTA | 67.0 | xz II (oe-o) | RT | 2.4 | 2.0 | 1.2 | 0.05 | |
| " | " | 630 | KTP | 63.1 | xz II (oe-o) | RT | 2.6 | 2.4 | 1.5 | 0.04 | |
| " | " | 630 | RTP | 69.5 | xz II (oe-o) | RT | 2.5 | 1.8 | 1.4 | 0.06 | |
| OPO III | 450 + 1682 | 450 | BBO | 27.4 | I (oo-e) | RT | 0.9 | 3.8 | 0.2 (S) / 3.1 (I) | 0.008 | - |
| " | 450 + 1682 | 450 | LBO | 27.2 | xy I (oo-e) | 40 | 0.08 | 0 | 0.4 (S) / 1.9 (I) | | 5.1 |
| " | 450 + 1682 | 450 | LBO | 0 | xz II (e-oe) | ~150 | ~0.11 | 0 | ~1.5 (S) /~1.5(I) | | ~3 |
| OPO IV | 460 + 631 | | BBO | 46.9 | I (oo-e) | RT | 0.5 | 4.9 | 0.4 (S) / 0.8 (I) | 0.005 | - |

EP 0 728 400 B1

**Patentansprüche**

1. Verfahren zum Erzeugen mindestens dreier Laserstrahlen (50, 52, 54) unterschiedlicher Wellenlängen zur Darstellung farbiger Videobilder, bei dem jeder Laserstrahl (50, 52, 54) zur Erzeugung eines monochromen Teilbildes intensitätsmäßig gesteuert wird, und diese monochromen Teilbilder für die Darstellung des farbigen Videobildes additiv gemischt werden, wobei mindestens einer der drei Laserstrahlen (50, 52, 54) dadurch gewonnen wird, daß ein Medium (60) zumindest von einem Teilstrahl eines primären Lasers (56) mit definierter Wellenlänge angeregt wird, das bei Anregung einen Laserstrahl mit einer von der Wellenlänge des anregenden primären Lasers (56) verschiedenen Wellenlänge aussendet, und wobei der anregende und der angeregte Laserstrahl direkt oder nach Frequenzkonvertierung zur Darstellung monochromer Teilbilder eingesetzt werden, **dadurch gekennzeichnet**, daß als primärer Laser ein gepulster Laser (56) und als Medium (60) ein Material mit nichtlinearen optischen Eigenschaften eingesetzt wird, wobei dieses Material neben dem durch Anregung erzeugten Laserstrahl noch einen weiteren Laserstrahl freigibt, dessen Frequenz sich als Summe oder Differenz von Frequenzen des anregenden und des angeregten Laserstrahls ergibt, und daß die vom Medium (60) abgegebenen Laserstrahlen und der anregende Laserstrahl direkt als Laserstrahlen (50, 52, 54) zur Darstellung der monochromen Teilbilder eingesetzt oder in diese konvertiert werden.

2. Verfahren nach Anspruch 1, dadurch gekennzeichnet, daß der primäre Laser (56) mit einer Pulsdauer unter 100 ps gepulst wird.

3. Verfahren nach Anspruch 1 oder 2, dadurch gekennzeichnet, daß der anregende Laser (56) bezüglich seiner Wellenlänge und das Medium (60) so ausgesucht sind, daß bei Zuordnung der Farben Rot, Grün und Blau zu den Wellenlängen der drei zur Darstellung der monochromen Teilbilder erzeugten Laserstrahlen (50, 52, 54) die Wellenlänge des erzeugten blauen Laserstrahls (54) zwischen 400 nm und 470 nm liegt, die Wellenlänge des erzeugten grünen Laserstrahls (52) im Bereich von 520 nm bis 540 nm liegt, und die Wellenlänge des erzeugten roten Laserstrahls (50) kleiner als 635 nm ist, wobei die Leistungen der Laserstrahlen mit den Farben Rot und Blau über die Pulsdauer nicht mehr als 30 % von der Leistung des grünen Laserstrahls abweichen.

4. Verfahren nach einem der Ansprüche 1 bis 3, dadurch gekennzeichnet, daß über die Grundfrequenz oder eine höhere Harmonische eines modengekoppelten Nd: YLF-Lasers (56) oder eines Nd: YVO$_4$-Lasers angeregt wird.

5. Verfahren nach einem der Ansprüche 1 bis 4, dadurch gekennzeichnet, daß das Material für das Medium (60) so ausgewählt und das Medium sowie Spiegel (65, 66, 67, 68) zur phasengerechten Einkopplung der anregenden und ausgehenden Laserstrahlen so positioniert werden, daß sich der Aufbau eines optisch-parametrischen Oszillators (64) ergibt.

6. Verfahren nach einem der Ansprüche 1 bis 5, dadurch gekennzeichnet, daß die Temperatur des Mediums (60) geregelt wird.

7. Verfahren nach Anspruch 6, dadurch gekennzeichnet, daß die Wellenlänge des angeregten Laserstrahls über die Temperatur des Mediums (60) eingestellt wird.

8. Verfahren nach einem der Ansprüche 1 bis 7, dadurch gekennzeichnet, daß die anregenden und/oder die im Medium (60) durch die anregenden Laserstrahlen erzeugten Laserstrahlen zur Konversion frequenzvervielfacht oder mit einem anderen Laserstrahl frequenzsummiert werden.

9. Verfahren nach einem der Ansprüche 1 bis 8, dadurch gekennzeichnet, daß die Pulsdauer der Laserstrahlen so eingestellt wird, daß das erzeugte Wellenlängenspektrum im Laserstrahl Interferenzen des Laserstrahls mit sich selbst auslöscht.

10. Verfahren nach einem der Ansprüche 1 bis 9, dadurch gekennzeichnet, daß die monochromen Teilbilder durch sequentielles Rastern des Bildes als Bildpunkte mit einer vorgegebenen Bildpuktfrequenz erzeugt und die Pulse des anregenden Laserstrahls mit einer Wiederholfrequenz wiederholt werden, die ein ganzzahliges Vielfaches der Bildpunktfrequenz ist.

11. Vorrichtung zum Erzeugen mindestens dreier Laserstrahlen unterschiedlicher Wellenlängen zur Darstellung farbiger Videobilder, insbesondere zur Durchführung des Verfahrens nach Anspruch 1, mit einer Steuerungseinrichtung (12, 22, 32; 42) zur Ansteuerung der drei Laserstrahlen zum Generieren monochromer Teilbilder, die für die Darstellung des farbigen Videobildes additiv mischbar sind, und mit einem primären Laser (56) sowie einem durch diesen anregbaren Medium (60), wobei der anregende und der angeregte Laserstrahl direkt oder nach Frequenzkonvertierung zur Darstellung monochromer Teilbilder einsetzbar sind, **dadurch gekennzeichnet**, daß der primäre Laser (56) so gepulst betreibbar ist, daß seine Lichtleistung in einem Puls freigegeben wird, und das Medium (60) ein Material mit nichtlinearen optischen Eigenschaften ist, das neben dem durch den primären Laserstrahl angeregten Laserstrahl auch einen weiteren Laserstrahl freigibt, dessen Frequenz sich aufgrund der nichtlinearen optischen Eigenschaften des Materials als Summe oder Differenz von Frequenzen des primären und des angeregten Laserstrahls ergibt.

12. Vorrichtung nach Anspruch 11, dadurch gekennzeichnet, daß Spiegel (65, 66, 67, 68) zur phasengerechten Einkopplung der anregenden und ausgehenden Laserstrahlen relativ zum Medium (60) vorgesehen sind, das Medium (60) ferner ein nichtlinearer optischer Kristall ist und Kristall sowie Spiegel (65, 66, 67, 68) bezüglich des primären Lasers in Art eines optisch-parametrischen Oszillators (60) angeordnet sind.

13. Vorrichtung nach Anspruch 11 oder 12, dadurch gekennzeichnet, daß eine Regeleinrichtung (62) zum Regeln der Temperatur des Mediums (60) vorgesehen ist.

14. Vorrichtung nach Anspruch 13, dadurch gekennzeichnet, daß die Regeleinrichtung (62) bezüglich der zu regelnden Temperatur einstellbar ist und die Wellenlänge des vom eingesetzten Medium (60) angeregten Laserstrahls temperaturabhängig ist.

15. Vorrichtung nach einem der Ansprüche 11 bis 14, dadurch gekennzeichnet, daß zur Konversion der Laserstrahlen Frequenzvervielfacher (75, 76; SHG, THG, FHG) oder Summenfrequenzbilder (SFM) vorgesehen sind.

16. Vorrichtung nach einem der Ansprüche 11 bis 15, dadurch gekennzeichnet, daß eine Ablenkeinrichtung (42) zum Generieren der monochromen Teilbilder in einem Bildpunktraster mit einer Bildpunktfrequenz und eine Pulseinrichtung für den primären Laser (56) vorgesehen sind, die den Laser mit einer Wiederholfrequenz pulst, die ein ganzzahliges Vielfaches der Bildpunktfrequenz ist.

17. Vorrichtung nach einem der Ansprüche 11 bis 16, dadurch gekennzeichnet, daß in mindestens einem der Lichtwege der Laser ein selbstmodulierendes optisches Medium vorgesehen ist.

## Claims

1. A method of producing at least three laser beams (50, 52, 54) of different wavelengths for the production of coloured video images, wherein each laser beam (50, 52, 54) is controlled in intensity in order to produce a monochrome partial image, and these monochrome partial images are mixed additively to produce the coloured video image, at least one of the three laser beams (50, 52, 54) being obtained by stimulating a medium (60) at least by a partial beam of a primary laser (56) of defined wavelength, which medium on stimulation emits a laser beam of a wavelength different from the wavelength of the stimulating primary laser (56), and the stimulating laser beam and the stimulated laser beam are used directly or after frequency conversion to produce monochrome partial images, characterised in that the primary laser used is a pulsed laser (56) and the medium (60) used is a material having non-linear optical properties, said material releasing, in addition to the stimulation-produced laser beam, another laser beam whose frequency evolves as the sum or difference of frequencies of the stimulating laser beam and the stimulated laser beam, and in that the laser beams emitted by the medium (60), and the stimulating laser beam, are used directly as laser beams (50, 52, 54) for the production of the monochrome partial images or are converted thereto.

2. A method according to claim 1, characterised in that the primary laser (56) is pulsed with a pulse duration of less than 100 ps.

3. A method according to claim 1 or 2, characterised in that the stimulating laser (56) is so selected in respect of its wavelength and the medium (60) is so selected that on allocation of the colours red, green and blue to the wavelengths of the three laser beams (50, 52, 54) generated to produce the monochrome partial images, the wavelength of the blue laser beam (54) generated is between 400 nm and 470 nm, the wavelength of the green laser beam (52) generated is in the range from 520 nm to 540 nm, and the wavelength of the red laser beam (50) generated is less than 635 nm, the powers of the laser beams with the colours red and blue differing from the power of the green laser beam by not more than 30% over the pulse duration.

4. A method according to any one of claims 1 to 3, characterised in that stimulation is effected via the fundamental frequency or a higher harmonic of a mode-coupled Nd: YLF laser (56) or an Nd: YVO$_4$ laser.

5. A method according to any one of claims 1 to 4, characterised in that the material for the medium (60) is so selected and the medium, and also mirrors (65, 66, 67, 68) for correct-phase inputting of the stimulating and emitted laser beams, are so positioned as to result in the formation of an optical parametric oscillator (64).

6. A method according to any one of claims 1 to 5, characterised in that the temperature of the medium (60) is controlled.

7. A method according to claim 6, characterised in that the wavelength of the stimulated laser beam is adjusted by way of the temperature of the medium (60).

8. A method according to any one of claims 1 to 7, characterised in that for conversion purposes the stimulating laser beams and/or the laser beams generated in the medium (60) by the stimulating laser beams are frequency-multiplied or are frequency-summated with another laser beam.

9. A method according to any one of claims 1 to 8, characterised in that the pulse duration of the laser beams is so adjusted that the wavelength spectrum generated quenches interference of the laser beam with itself in the laser beam.

10. A method according to any one of claims 1 to 9, characterised in that the monochrome partial images are produced by sequential rastering of the image as pixels with a predetermined pixel frequency and the pulses of the stimulating laser beam are repeated at a repetition frequency which is an integral multiple of the pixel frequency.

11. Apparatus for generating at least three laser beams of different wavelengths for the production of coloured video images, more particularly for performing the method according to claim 1, with a control means (12, 22, 32; 42) for controlling the three laser beams for generating monochrome partial images additively miscible to produce the coloured video image, and with a primary laser (56) and with a medium (60) adapted to be stimulated by the primary laser, the stimulating laser beam and the stimulated laser beam being usable either directly or after frequency conversion for the purpose of producing monochrome partial images, characterised in that the primary laser (56) is operable in pulsed manner such that its light output is released in a pulse, and the medium (60) is a material with non-linear optical properties which, in addition to the laser beam stimulated by the primary laser beam, also releases another laser beam, the frequency of which, due to the non-linear optical properties of the material, evolves as the sum or difference of frequencies of the primary laser beam and of the stimulated laser beam.

12. Apparatus according to claim 11, characterised in that mirrors (65, 66, 67, 68) are provided for correct-phase inputting of the stimulating laser beams and emitted laser beams relatively to the medium (60), the medium (60) is also a non-linear optical crystal and the crystal and mirrors (65, 66, 67, 68) are arranged after the style of an optical parametric oscillator (60) with respect to the primary laser.

13. Apparatus according to claim 11 or 12, characterised in that a control device (62) is provided to control the temperature of the medium (60).

14. Apparatus according to claim 13, characterised in that the control device (62) is adjustable with respect to the temperature being controlled and the wavelength of the laser beam stimulated by the medium (60) used is temperature-dependent.

15. Apparatus according to any one of claims 11 to 14, characterised in that frequency multipliers (75, 76; SHG, THG, FHG) or sum frequency formers (SFM) are provided for conversion of the laser beams.

16. Apparatus according to any one of claims 11 to 15, characterised in that a deflection device (42) for generating the monochrome partial images in a pixel raster at a pixel frequency and a pulse means for the primary laser (56) are provided, which pulses the laser at a repetition frequency which is an integral multiple of the pixel frequency.

17. Apparatus according to any one of claims 11 to 16, characterised in that a self-modulating optical medium is provided in at least one of the light paths of the lasers.

**Revendications**

1. Procédé destiné à produire au moins trois rayons laser (50, 52, 53) de longueurs d'onde différentes servant à visualiser des images vidéo en couleur, dans lequel, pour produire une image partielle monochrome, chaque rayon laser (50, 52, 54) est commandé en intensité et ces images partielles monochromes sont mélangées de manière additionnelle pour la visualisation de l'image vidéo en couleur, l'un au moins des trois rayons laser (50, 52, 54) étant obtenu en ce qu'un milieu (60) est excité par un rayon partiel d'un laser primaire (56) de longueur d'onde définie, qui, lors de l'excitation, émet un rayon laser d'une longueur d'onde différente de celle du laser primaire (56) d'excitation, et le rayon laser d'excitation ainsi que le rayon laser excité étant utilisés directement ou après conversion de fréquence en vue de la visualisation d'images partielles monochromes, caractérisé en ce qu'on utilise comme laser primaire un laser pulsé (56) et comme milieu (60) un matériau présentant des propriétés optiques non linéaires, ce matériau délivrant, en plus du rayon laser produit par excitation, encore un autre rayon laser dont la fréquence résulte de la somme ou de la différence des fréquences du rayon laser d'excitation et du rayon laser excité et en ce que les rayons laser délivrés par le milieu (60) et le rayon laser d'excitation sont utilisés directement comme rayons laser (50, 52, 54) en vue de la visualisation des images partielles monochromes ou sont convertis en ceux-ci.

2. Procédé selon la revendication 1, caractérisé en ce que le laser primaire (56) est pulsé avec une durée d'impulsion inférieure à 100 ps.

3. Procédé selon la revendication 1 ou 2, caractérisé en ce que le laser d'excitation (56) est choisi en ce qui concerne sa longueur d'onde et le milieu (60) de manière que lors de l'affectation des couleurs rouge, vert et bleu aux longueurs d'onde des trois rayons laser (50, 52, 54) produits pour la visualisation des images partielles monochromes, la longueur d'onde du rayon laser bleu (54) produit se situe entre 400 nm et 470 nm, la longueur d'onde du rayon laser vert (52) produit se situe entre 520 nm et 540 nm, et la longueur d'onde du rayon laser rouge (50) produit soit inférieure à 635 nm, les puissances des rayons laser de couleur rouge et bleu ne s'écartant pas de plus de 30 % de la puissance du rayon laser vert pendant la durée d'impulsion.

4. Procédé selon l'une des revendications 1 à 3, caractérisé en ce que l'excitation se produit à la fréquence de base ou à une harmonique supérieure d'un laser Nd: YLF (56) ou d'un laser Nd: YVO$_4$ à modes verrouillés.

5. Procédé selon l'une des revendications 1 à 4, caractérisé en ce que le matériau pour le milieu (60) est choisi et le milieu ainsi que des miroirs (65, 66, 67, 68) pour l'alimentation en phase des rayons laser d'excitation et des rayons laser sortants sont positionnés de manière qu'il en résulte la construction d'un oscillateur (64) opto-parémétrique.

6. Procédé selon l'une des revendications 1 à 5, caractérisé en ce que la température du milieu (60) est régulée.

7. Procédé selon la revendication 6, caractérisé en ce que la longueur d'onde du rayon laser excité est réglée par l'intermédiaire de la température du milieu (60).

8. Procédé selon l'une des revendications 1 à 7, caractérisé en ce que les rayons laser d'excitation et/ou les rayons laser produits dans le milieu (60) par les rayons laser d'excitation sont multipliés en fréquence ou additionnés en fréquence avec un autre rayon laser en vue de la conversion.

9. Procédé selon l'une des revendications 1 à 8, caractérisé en ce que la durée d'impulsion des rayons laser est réglée de manière que le spectre des longueurs d'onde produites dans le rayon laser efface de lui-même des interférences du rayon laser.

10. Procédé selon l'une des revendications 1 à 9, caractérisé en ce que les images partielles monochromes sont produites par balayage séquentiel de l'image en tant que points d'image avec une fréquence de points d'image donnée et les impulsions du rayon laser d'excitation sont renouvelées à une fréquence qui est un multiple entier de la fréquence de points d'image.

11. Procédé destiné à produire au moins trois rayons laser de longueurs d'onde différentes en vue de la visualisation d'images vidéo en couleur, en particulier pour la mise en oeuvre du procédé selon la revendication 1, comportant un dispositif de commande (12, 22, 32; 42) pour la commande des trois rayons laser servant à générer des images partielles monochromes, qui peuvent être mélangées de manière additionnelle pour visualiser l'image vidéo en couleur, et comportant un laser primaire (56) ainsi qu'un milieu (60) pouvant être excité par celui-ci, le rayon laser d'excitation et le rayon laser excité pouvant être utilisés directement ou après conversion de fréquence en vue de la visualisation d'images partielles monochromes, caractérisé en ce que le laser primaire (56) peut fonctionner de manière pulsée de façon que sa puissance lumineuse soit délivrée en une impulsion, et le milieu (60) est un matériau aux propriétés optiques non linéaires, qui outre le rayon laser excité par le premier rayon laser délivre aussi un autre rayon laser dont la fréquence, en raison des propriétés optiques non linéaires du matériau, est égale à la somme ou à la différence des fréquences du rayon laser primaire et du rayon laser excité.

12. Dispositif selon la revendication 11, caractérisé en ce que des miroirs (65, 66, 67, 68) sont prévus pour l'alimentation en phase des rayons laser d'excitation et des rayons laser sortants par rapport au milieu (60), le milieu (60) est en outre un cristal optique non linéaire et le cristal ainsi que les miroirs (65, 66, 67, 68) sont disposés par rapport au laser primaire à la manière d'un oscillateur (60) opto-paramétrique.

13. Dispositif selon la revendication 11 ou 12, caractérisé en ce qu'un dispositif de régulation (62) est prévu pour la régulation de la température du milieu (690).

14. Dispositif selon la revendication 13, caractérisé en ce que le dispositif de régulation (62) est réglable par rapport à la température à réguler et la longueur d'onde du rayon laser excité par le milieu (60) utilisé dépend de la température.

15. Dispositif selon l'une des revendications 11 à 14, caractérisé en ce que pour la conversion des rayons laser sont prévus des multiplicateurs de fréquence (75, 76; SHG, THG, FHG) ou des formateurs de fréquence de totalisation (SFM).

16. Dispositif selon l'une des revendications 11 à 15, caractérisé en ce que sont prévus un dispositif de déviation (42) destiné à produire les images partielles monochromes dans une trame de points d'image avec une fréquence de points d'image ainsi qu'un dispositif à impulsions pour le laser primaire (56), qui pulse le laser à une fréquence de répétition, qui est un multiple entier de la fréquence de points d'image.

17. Dispositif selon l'une des revendications 11 à 16, caractérisé en ce qu'un milieu optique à automodulation est prévu dans au moins l'un des parcours lumineux des lasers.

# Fig.1

LASER 1 —rot→ Modulator

LASER 2 —grün→ Modulator

LASER 3 —blau→ Modulator

Ablenk-system

(zweidimensional)

10   12   40   46   42   44

20   22

30   32

EP 0 728 400 B1

Fig. 2

EP 0 728 400 B1

# Fig. 3

# Fig.4

He-Ne-Laser

ps-KTP-OPO

Diaprojektor

**Fig. 5**

EP 0 728 400 B1

1064 532 355 266

OPO-I OPO-IIa OPO-IIb OPO-IIc OPO-III OPO-IV

S I | S I | S I | S I | I S | S I

SFM SFM SFM SFM SFM SHG SHG SFM

Rot Blau Rot Blau Rot Blau Blau Rot Rot Blau Blau Rot

## Fig. 6